# FASCICULE DE BREVET EUROPEEN

(11) **EP 2 846 430 B1**
(45) Date de publication et mention de la délivrance du brevet: **04.10.2017**
(21) Numéro de dépôt: 14180673.7
(22) Date de dépôt: 12.08.2014
(51) Int. Cl.: H02G 15/18, H01R 4/02

(54) **Dispositif de jonction de câbles de transport électrique hybrides**
Verbindungsvorrichtung für Hybridstromkabel
Jointing device for hybrid electrical cables

(30) Priorité: 05.09.2013 FR 1358488
(43) Date de publication de la demande: 11.03.2015
(73) Titulaire: Nexans, 92400 Courbevoie (FR)
(72) Inventeur: Boëdec, Marc Laurent, 56600 Lanester (FR); Ait Amar, Abdellatif, 62100 Calais (FR)
(74) Mandataire: Lenne, Laurence

(56) Documents cités:
- WO-A1-86/02210
- WO-A1-2011/103036
- CN-Y- 2 906 841
- DE-A1- 2 931 642
- FR-A1- 2 243 537
- US-A- 1 793 293

## Description

L'invention concerne un dispositif de jonction de câbles de transport électrique hybrides.

Comme décrit dans le document de brevet CN 2006/20073616, il est connu de réaliser des câbles de transport électrique hybrides comportant des fils conducteurs en aluminium toronnés dans la zone centrale du câble et des fils conducteurs en cuivre enroulés sur et à l'extérieur de cette zone centrale.

L'invention propose un dispositif de jonction de tels câbles de transport électrique hybrides en particulier destinés à la haute tension.

Le document de brevet WO 2011/103036 concerne un dispositif de connexion de câbles comportant un jonc central porteur constitué de fils composites comportant des fibres noyées dans une matrice qui peut être de l'aluminium, sur lequel sont enroulés des fils conducteurs métalliques qui peuvent être en cuivre.

Selon ce dispositif, le jonc central des câbles aboutés est dénudé des fils conducteurs qui sont supprimés sur une longueur correspondante et les deux joncs aboutés sont connectés par un tube équipé de manchons internes dans lequel leur extrémité est insérée et sertie.

La connexion des fils conducteurs externes est quant à elle réalisé au moyen d'un tube connecteur métallique externe serti à ses extrémités sur les fils conducteurs de chaque côté du dispositif de connexion.

Si un tel dispositif de connexion peut convenir pour de tels câbles où le jonc central a une fonction de support mécanique des fils conducteurs externes, il n'assure pas une tenue électrique de la connexion dans le cas de câbles hybrides tels que décrit plus haut, où les fils en aluminium centraux ont une fonction de transport électrique, et ceci surtout en haute tension.

Par ailleurs, les documents de brevet WO 86/02210, FR 2 243 537, US 1 793 293 et DE 29 31 642 décrivent des dispositifs de connexion de câbles de transport électrique.

Pour résoudre ce problème, l'invention propose un dispositif de connexion de câbles de transport électrique hybrides assurant une tenue électrique optimale, en particulier en haute tension.

Pour ce faire, l'invention propose un dispositif de connexion comprenant deux câbles de transport électrique hybrides comportant chacun des premiers fils conducteurs en un premier métal toronnés dans la zone centrale du câble et des seconds fils conducteurs en un second métal de dureté supérieure à celle dudit premier métal, enroulés sur et à l'extérieur de cette zone centrale, lesdits seconds fils conducteurs desdits câbles étant connectés par un manchon conducteur externe, caractérisé en ce que lesdits premiers fils centraux des câbles sont connectés par une soudure constituée dudit premier métal et reliant leur extrémité, cette soudure et cette extrémité étant recouvertes d'un tube de métal de dureté égale ou supérieure à celle desdits seconds fils, au moins partiellement au droit dudit manchon, l'extrémité desdits second fils étant reconstituée sur lesdits premiers fils et sur ledit tube sous ledit manchon conducteur externe, lesdits seconds fils recouvrant au moins partiellement ledit tube.

Bien que, selon le mode de réalisation préféré, le premier métal soit de l'aluminium et le second métal soit du cuivre, le dispositif de connexion conforme à l'invention est de façon générale particulièrement adapté à des câbles comportant chacun des premiers fils conducteurs en un premier métal toronnés dans la zone centrale du câble et des seconds fils conducteurs en un second métal de dureté supérieure à celle dudit premier métal, enroulés sur et à l'extérieur de cette zone centrale.

La soudure des premiers fils centraux des câbles assure une bonne transmission et une bonne tenue électriques de ces fils.

Le tube de métal de dureté supérieure protège mécaniquement ces premiers fils en un métal de dureté inférieure à celle des seconds fils et permet de mettre en place le manchon conducteur externe serti par compression sur les seconds fils reconstitués ou vissé sur ceux-ci.

Selon un mode de réalisation préféré, ledit premier métal est de l'aluminium, ledit second métal est du cuivre et ledit tube est en acier ou en cuivre dur.

Ledit manchon conducteur externe peut être serti ou à vis.

L'invention concerne également un procédé de réalisation d'un tel dispositif de connexion, de deux câbles de transport électrique hybrides aboutés comportant chacun des premiers fils conducteurs en un premier métal toronnés dans la zone centrale du câble et des seconds fils conducteurs en un second métal de dureté supérieure à celle dudit premier métal, enroulés sur et à l'extérieur de cette zone centrale, consistant à connecter lesdits seconds fils conducteurs desdits câbles par un manchon conducteur externe, caractérisé en ce qu'il comporte les étapes préalables suivantes :
- dégager l'extrémité desdits premiers fils par repliement desdits seconds fils,
- connecter lesdits premier fils centraux des câbles par une soudure constituée dudit premier métal et reliant leur extrémité,
- recouvrir cette soudure et cette extrémité d'un tube de métal de dureté égale ou supérieure à celle desdits seconds fils, au moins partiellement au droit dudit manchon,
- reconstituer l'extrémité desdits second fils sur lesdits premiers fils et sur ledit tube sous ledit manchon conducteur externe, lesdits seconds fils recouvrant au moins partiellement ledit tube, avant mise en place dudit manchon conducteur.

Selon un mode de réalisation préféré, ladite soudure est effectuée au creuset

Cette soudure peut également par exemple être réalisée par le procédé TIG (« Tungsten Inert Gas »)

Le manchon conducteur externe peut être serti ou à vis.

L'invention est décrite ci-après plus en détail à l'aide de figures ne représentant qu'un mode de réalisation préféré de l'invention.
Les figures 1 à 4 sont des vues en coupe longitudinales illustrant la réalisation d'un dispositif de connexion selon un premier mode de réalisation de l'invention.
La figure 5 est une vue en coupe selon V-V de la figure 4.
Les figures 6 et 7 sont des vues en coupe longitudinales totale et partielle représentant un dispositif de connexion selon un second mode de réalisation de l'invention.

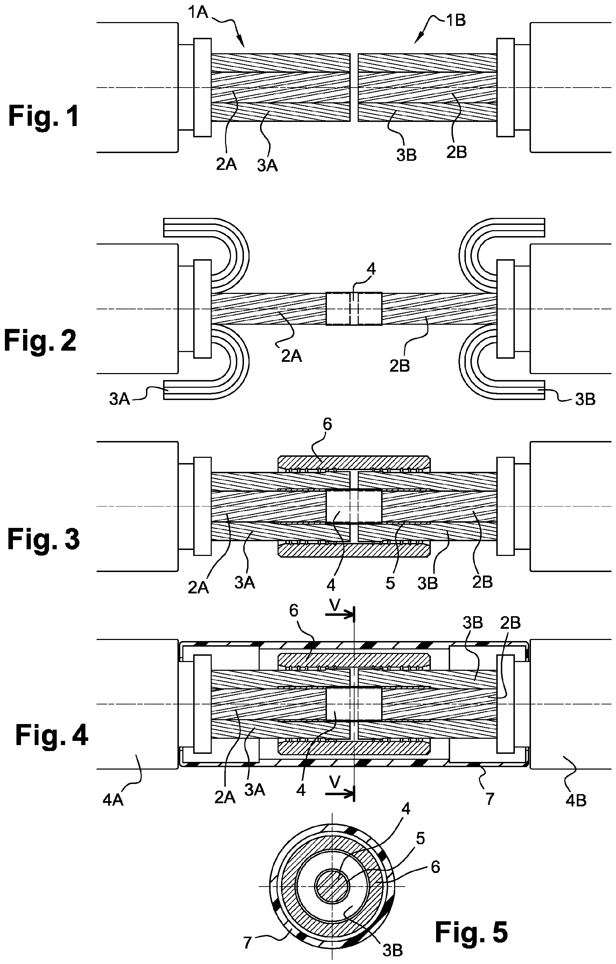

Comme représenté sur la figure 1, deux câbles de transport électrique hybrides 1A, 1B comportent chacun des premiers fils conducteurs 2A, 2B en un premier métal toronnés dans la zone centrale du câble et des seconds fils conducteurs 3A, 3B en un second métal de dureté supérieure à celle du premier métal, enroulés sur et à l'extérieur de cette zone centrale. Ils sont aboutés l'un à l'autre, afin de réaliser leur connexion électrique.

Selon l'application préférée de l'invention, ledit premier métal est de l'aluminium et ledit second métal est du cuivre.

Comme représenté sur la figure 2, l'extrémité des premiers fils 2A, 2B est dégagée par déroulement et repliement des seconds fils 3A, 3B.

Les premiers fils centraux 2A, 2B des câbles sont alors connectés par une soudure effectuée au creuset 4 constituée d'aluminium et reliant leur extrémité. Cette soudure au creuset 4 comble l'espace existant entre les extrémités aboutées des premiers fils 2A, 2B tout en connectant de façon particulièrement efficace les fils qui sont eux-mêmes fondus sur une longueur d'environ 10mm de chaque côté de cet espace comblé.

Comme visible sur la figure 3, cette soudure 4 et ces extrémités sont ensuite recouvertes d'un tube 5 de métal de dureté égale ou supérieure à celle des seconds fils, de préférence en acier ou en cuivre dur, au moins au droit d'un manchon 6 serti par compression sur les seconds fils conducteurs, une fois l'extrémité des seconds fils 3A, 3B reconstituée sur les premiers fils 2A, 2B et sur le tube 5, les seconds fils recouvrant donc au moins partiellement le tube 5.

De préférence, comme illustré sur les figures 4 et 5, le dispositif de connexion est réalisé avec l'extrémité des deux câbles 1A, 1B dénudé de leur gaine isolante 4A, 4B sur une longueur relativement limitée. Afin de reconstituer cette isolation au droit du dispositif de connexion, des rainures 5A, 5B sont usinées à l'extrémité de ces gaines 4A, 4B et une enveloppe isolante 7 est emboîtée par ces extrémités dans ces rainures 5A, 5B et recouvre le dispositif de connexion.

Le tube 5 est alors constitué de deux demi-cylindres, selon un cylindre coupé sur deux de ses génératrices, appliqués autour de la soudure 4 et d'une partie des extrémités de seconds fils 3A, 3B.

De même, le manchon 6 est également constitué de deux demi-cylindres longitudinaux sertis sur ces seconds fils 3A, 3B.

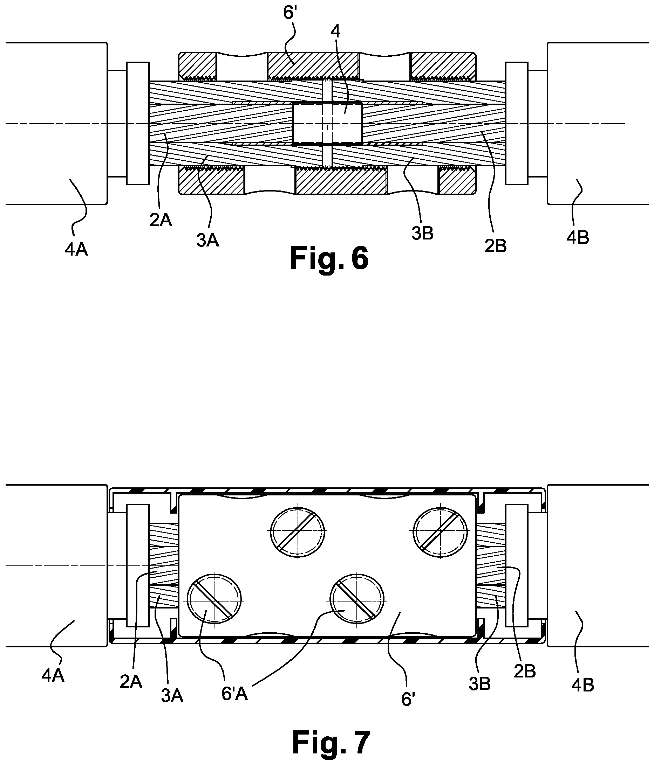

Sur les figures 6 et 7, est représenté un dispositif de connexion également réalisé selon les mêmes étapes que précédemment, mais ici comportant un manchon conducteur externe 6' à vis 6'A.

Dans tous cas, les deux parties demi-cylindriques du manchon conducteur externe sont vissées par exemple en quatre points au niveau des extrémités pour les maintenir en place avant de sertir ou de visser l'ensemble du manchon.

## Revendications

1. Dispositif de connexion comprenant deux câbles de transport électrique hybrides (1A, 1B) comportant chacun des premiers fils conducteurs (2A, 2B) en un premier métal toronnés dans la zone centrale du câble et des seconds fils conducteurs (3A, 3B) en un second métal de dureté supérieure à celle dudit premier métal, enroulés sur et à l'extérieur de cette zone centrale, lesdits seconds fils conducteurs (3A, 3B) desdits câbles étant connectés par un manchon conducteur externe (6, 6') , **caractérisé en ce que** lesdits premier fils centraux (2A, 2B) des câbles sont connectés par une soudure (4) constituée dudit premier métal et reliant leur extrémité, cette soudure et cette extrémité étant recouvertes d'un tube (5) de métal de dureté égale ou supérieure à celle desdits seconds fils (3A, 3B), au moins partiellement au droit dudit manchon (6, 6'), l'extrémité desdits second fils (3A, 3B) étant reconstituée sur lesdits premiers fils (2A, 2B) et sur ledit tube (5) sous ledit manchon conducteur externe (6, 6'), lesdits seconds fils (3A, 3B) recouvrant au moins partiellement ledit tube (5).

2. Dispositif selon la revendication 1, **caractérisé en ce que** ledit premier métal est de l'aluminium, ledit second métal est du cuivre et ledit tube (5) est en acier ou en cuivre dur.

3. Dispositif de connexion selon l'une des revendications précédentes, **caractérisé en ce que** ledit manchon conducteur externe (6, 6') est serti ou à vis.

4. Procédé de réalisation d'un dispositif de connexion selon l'une des revendications précédentes, de deux câbles de transport électrique hybrides (1A, 1B) aboutés comportant chacun des premiers fils conducteurs (2A, 2B) en un premier métal toronnés dans la zone centrale du câble et des seconds fils conducteurs (3A, 3B) en un second métal de dureté supérieure à celle dudit premier métal, enroulés sur et à l'extérieur de cette zone centrale, consistant à connecter lesdits seconds fils conducteurs (3A, 3B) desdits câbles par un manchon conducteur externe (6, 6'), **caractérisé en ce qu'**il comporte les étapes préalables suivantes :
- dégager l'extrémité desdits premiers fils (2A, 2B) par repliement desdits seconds fils (3A, 3B),
- connecter lesdits premier fils centraux (2A, 2B) des câbles par une soudure (4) constituée dudit premier métal et reliant leur extrémité,
- recouvrir cette soudure et cette extrémité d'un tube (5) de métal de dureté égale ou supérieure à celle desdits seconds fils (3A, 3B), au moins partiellement au droit dudit manchon (6, 6'),
- reconstituer l'extrémité desdits second fils (3A, 3B) sur lesdits premiers fils (2A, 2B) et sur ledit tube (5) sous ledit manchon conducteur externe (6, 6'), lesdits seconds fils (3A, 3B) recouvrant au moins partiellement ledit tube (5), avant mise en place dudit manchon conducteur externe (6, 6').

5. Procédé selon la revendication 4, **caractérisé en ce que** ladite soudure (4) est effectuée au creuset.

6. Procédé selon la revendication 4 ou 5, **caractérisé en ce que** ledit manchon conducteur externe (6, 6') est serti ou à vis.

## Patentansprüche

1. Verbindungsvorrichtung, umfassend zwei Hybrid-Stromtransportkabel (1A, 1B), aufweisend jeweils erste leitende Drähte (2A, 2B) aus einem ersten Metall, die in der zentralen Zone des Kabels verdrallt sind, und zweite leitende Drähte (3A, 3B) aus einem zweiten Metall mit einer höheren Härte als die des ersten Metalls, gewickelt auf und außerhalb dieser zentralen Zone, wobei die zweiten leitenden Drähte (3A, 3B) der Kabel mit Hilfe einer externen leitenden Muffe (6, 6') verbunden sind, **dadurch gekennzeichnet, dass** die ersten zentralen Drähte (2A, 2B) der Kabel mit Hilfe einer Schweißnaht (4), gebildet von dem ersten Metall und verbindend ihr Ende, verbunden sind, wobei diese Schweißnaht und dieses Ende von einem Rohr (5) aus Metall mit einer Härte, die der der zweiten Drähte (3A, 3B) entspricht oder höher ist, mindestens teilweise im Bereich der Muffe (6, 6') abgedeckt sind, wobei das Ende der zweiten Drähte (3A, 3B) auf den ersten Drähten (2A, 2B) und auf dem Rohr (5) unter der externen leitenden Muffe (6, 6') rekonstituiert sind, wobei die zweiten Drähte (3A, 3B) das Rohr (5) mindestens teilweise abdecken.

2. Vorrichtung nach Anspruch 1, **dadurch gekennzeichnet, dass** das erste Metall Aluminium ist, das zweite Metall Kupfer ist und das Rohr (5) aus Stahl oder aus hartem Kupfer ist.

3. Verbindungsvorrichtung nach einem der vorangehenden Ansprüche, **dadurch gekennzeichnet, dass** die externe leitende Muffe (6, 6') gefalzt oder geschraubt ist.

4. Herstellungsverfahren einer Verbindungsvorrichtung nach einem der vorangehenden Ansprüche von zwei aneinander stoßenden Hybrid-Stromtransportkabeln (1A, 1B), aufweisend jeweils erste leitende Drähte (2A, 2B) aus einem ersten Metall, die in der zentralen Zone des Kabels verdrallt sind, und zweite leitende Drähte (3A, 3B) aus einem zweiten Metall mit einer höheren Härte als die des ersten Metalls, gewickelt auf und außerhalb dieser zentralen Zone, das darin besteht, die zweiten leitenden Drähte (3A, 3B) der Kabel mit Hilfe einer externen leitenden Muffe (6, 6') zu verbinden, **dadurch gekennzeichnet, dass** es die folgenden vorangehenden Schritte aufweist:
- Freilegen des Endes der ersten Drähte (2A, 2B) durch Umlegen der zweiten Drähte (3A, 3B),
- Verbinden der ersten zentralen Drähte (2A, 2B) der Kabel mit Hilfe einer Schweißnaht (4), gebildet aus einem ersten Metall, die ihre Enden verbindet,
- Abdecken dieser Schweißnaht und dieses Endes mit einem Rohr (5) aus einem Metall mit einer Härte, die der der zweiten Drähte (3A, 3B) entspricht oder höher ist, mindestens teilweise im Bereich der Muffe (6, 6'),
- Rekonstituieren des Endes der zweiten Drähte (3A, 3B) auf den ersten Drähten (2A, 2B) und auf den Rohr (5) unter der externen leitenden Muffe (6, 6'), wobei die zweiten Drähte (3A, 3B) das Rohr (5) mindestens teilweise abdecken, vor Platzieren der externen leitenden Muffe (6, 6').

5. Verfahren nach Anspruch 4, **dadurch gekennzeichnet, dass** die Schweißnaht (4) im Tiegel hergestellt wird.

6. Verfahren nach Anspruch 4 oder 5, **dadurch gekennzeichnet, dass** die externe leitende Muffe (6, 6') gefalzt oder geschraubt ist.

## Claims

1. A connecting device comprising two hybrid electrical cables (1A, 1B) each including first conducting wires (2A, 2B) made from a first metal stranded in the central zone of the cable and second conducting wires (3A, 3B) made from a second metal with a hardness greater than that of the first metal, wound on and outside this central zone, said second conducting wires (3A, 3B) of said cables being connected by an outer conducting sleeve (6, 6'), **characterized in that** said first central wires (2A, 2B) of the cables are connected by a weld (4) made up of said first metal and connecting their end, this weld and this end being covered by a metal tube (5) with a hardness greater than or equal to that of said second wires (3A, 3B), at least partially in line with said sleeve (6, 6'), the end of said second wires (3A, 3B) being reconstituted on said first wires (2A, 2B) and on said tube (5) below said outer conducting sleeve (6, 6'), said second wires (3A, 3B) at least partially covering said tube (5).

2. The device according to claim 1, **characterized in that** said first metal is aluminum, said second metal is copper and said tube (5) is made from steel or hard copper.

3. The connecting device according to one of the preceding claims, **characterized in that** said outer conducting sleeve (6, 6') is crimped or screwed.

4. A method for producing a connecting device according to one of the preceding claims, for two married hybrid electrical cables (1A, 1B) each including first conducting wires (2A, 2B) made from a first metal stranded in the central zone of the cable and second conducting wires (3A, 3B) made from a second metal with a hardness greater than that of said first metal, wound on and outside this central zone, consisting of connecting said second conducting wires (3A, 3B) of said cables by an outer conducting sleeve (6, 6'), **characterized in that** it includes the following prior steps:
- freeing the end of said first wires (2A, 2B) by folding said second wires (3A, 3B),
- connecting said first central wires (2A, 2B) of the cables by a weld (4) made up of said first metal and connecting their end,
- covering this weld and this end with a metal tube (5) having a hardness greater than or equal to that of said second wires (3A, 3B), at least partially in line with said sleeve (6, 6'),
- reconstituting the end of said second wires (3A, 3B) on said first wires (2A, 2B) and on said tube (5) below said outer conducting sleeve (6, 6'), said second wires (3A, 3B) at least partially overlapping said tube (5), before placing said outer conducting sleeve (6, 6').

5. The method according to claim 4, **characterized in that** said weld (4) is done in a melting pot.

6. The method according to claim 4 or 5, **characterized in that** said outer conducting sleeve (6, 6') is crimped or screwed.
